# FASCICULE DE BREVET EUROPEEN

(11) **EP 3 887 606 B1**
(45) Date de publication et mention de la délivrance du brevet: **28.12.2022**
(21) Numéro de dépôt: 19868229.6
(22) Date de dépôt: 26.11.2019
(51) Int. Cl.: E02F 9/22, F16L 3/06, E02F 3/47, E02F 3/20, E02F 3/22, F16G 13/16

(54) **NAPPE HYDRAULIQUE MUNIE DE MAILLONS CLIPSABLES**
HYDRAULISCHE MATTE MIT ANKLEMMBAREN VERBINDUNGEN
HYDRAULIC MAT HAVING CLIP-ON LINKS

(30) Priorité: 28.11.2018 FR 1871988
(43) Date de publication de la demande: 06.10.2021
(73) Titulaire: Soletanche Freyssinet, 92500 Rueil Malmaison (FR)
(72) Inventeur: PIVERT, Laurent, 92500 RUEIL MALMAISON (FR); BERNASINSKI, Régis, 92500 RUEIL MALMAISON (FR)
(74) Mandataire: Cabinet Beau de Loménie
(86) Numéro de dépôt international: PCT/FR2019/052812
(87) Numéro de publication internationale: WO 2020/109718

(56) Documents cités:
- EP-A1- 0 816 735
- EP-A1- 2 178 173
- EP-A1- 2 532 791
- DE-U1-202013 101 604

## Description

### Domaine technique

La présente invention concerne le domaine des dispositifs de guidage pour flexibles hydrauliques qui sont notamment utilisés pour alimenter des organes hydrauliques de machines de forage.

### Technique antérieure

Pour la réalisation de tranchées dans le sol en forme de parois, on connaît des outils de forage appelés le plus souvent fraises. Ce type de machine comporte traditionnellement un châssis suspendu à l'extrémité de moyens de levage, ce châssis portant à son extrémité inférieure des outils de coupe entraînés par des moteurs hydrauliques. Ces derniers sont alimentés par des flexibles hydrauliques qui sont reliés en surface à des pompes hydrauliques. Comme les outils de coupe peuvent être amenés à des profondeurs très importantes, on comprend que les flexibles hydrauliques s'étendent sur plusieurs dizaines de mètres. Pour assurer à la fois le guidage des flexibles hydrauliques et l'enroulement sur un tambour situé en surface, on utilise traditionnellement un dispositif de guidage que l'on appelle nappe hydraulique.

L'invention porte plus précisément sur une nappe hydraulique ayant une direction longitudinale et comportant :
une pluralité de flexibles hydrauliques primaires s'étendant parallèlement les uns aux autres ;
au moins un premier flexible porteur qui s'étend parallèlement aux flexibles hydrauliques primaires.

Une telle nappe est notamment décrite dans les documents EP0518292 et FR2854674.

La nappe hydraulique décrite dans EP0518292 présente plusieurs inconvénients. Tout d'abord, elle comporte des entretoises de maintien et des pièces de bords qui demandent l'agencement précis de nombreuses pièces dont les faces doivent être correctement usinées pour créer une liaison articulée. La fabrication d'un tel dispositif est donc complexe et relativement couteuse.

Par ailleurs, lorsque le guide est enroulé sur le tambour, le diamètre de l'enroulement est très important à cause de la hauteur des entretoises de maintien qui sont empilées les unes sur les autres.

Le document FR 2854674 décrit une nappe hydraulique permettant de réduire le diamètre de l'enroulement. Pour ce faire, la nappe comporte un dispositif de guidage qui comprend des pièces transversales qui coopèrent avec les flexibles hydrauliques et un flexible porteur de même diamètre.

Traditionnellement, sur ce type de machine, on prévoit des flexibles hydrauliques standard ayant un diamètre d'un pouce et demi.

Lorsque l'on souhaite forer des tranchées de très grande profondeur, c'est-à-dire d'au moins 100 mètres, l'alimentation des moteurs hydrauliques nécessite d'utiliser des flexibles de grand diamètre afin de réduire les pertes de charge. Comme les flexibles hydrauliques présentent dans ce cas une grande longueur du fait de la profondeur de forage, on comprend que l'utilisation de flexibles de grand diamètre nécessite des modifications dans le dimensionnement des porteurs, en particulier au niveau des diamètres de tambours d'enroulement et de la tête de flèche où le rayon de courbure est le plus important.

Les documents EP2532791 et DE202013101604U1 décrivent également des exemples de réalisation de nappes hydrauliques pour des outils de forage.

### Exposé de l'invention

Un but de la présente invention est de proposer une nappe hydraulique permettant un enroulement plus facile des flexibles hydrauliques, notamment pour les flexibles hydrauliques de grand diamètre.

L'invention atteint son but par une nappe hydraulique selon la revendication 1. Cette nappe hydraulique comporte en outre :
au moins un premier flexible hydraulique secondaire parallèle aux flexibles hydrauliques primaires ;
une première série de maillons s'étendant parallèlement aux flexibles hydrauliques primaires, les maillons de la première série étant fixés au premier flexible hydraulique secondaire.

On comprend que les maillons sont mobiles les uns par rapport aux autres et ont pour effet d'accompagner et guider la déformation du premier flexible secondaire, notamment lors de l'enroulement sur le tambour ou au niveau de la flèche du mât du porteur.

La première série de maillons étant positionnée sur un flanc de l'ensemble constitué par les premier et second flexibles hydrauliques secondaires, on comprend que les maillons permettent également de protéger les flexibles hydrauliques secondaires contre des chocs latéraux.

La fixation des maillons de la première série au premier flexible hydraulique secondaire permet d'assurer l'orientation correcte des maillons, notamment pendant l'enroulement de la nappe, ce qui permet d'enrouler correctement la nappe autour du tambour.

De préférence, les maillons sont réalisés dans une matière souple, par exemple du plastique grâce à quoi ils peuvent facilement se déformer pour accompagner la déformation en flexion des flexibles hydrauliques, notamment lors de l'enroulement.

Les maillons sont préférentiellement en polyuréthane, de préférence réalisés par moulage injection.

Selon l'invention, les maillons de la première série comportent des logements dans lesquels le premier flexible hydraulique secondaire est engagé.

Ces logements sont préférentiellement débouchants.

Les maillons peuvent être enfilés sur le premier flexible hydraulique secondaire.

Toutefois, selon un mode de réalisation préférentiel, les maillons de la première série sont fixés par clipsage au premier flexible hydraulique secondaire.

Un intérêt est de pouvoir monter, ou démonter les maillons sur le premier flexible hydraulique secondaire, de façon aisée et rapide, par exemple lors d'une opération de maintenance. Cela permet également de se dispenser d'un câble de guidage des maillons.

De préférence, les maillons comportent une partie d'accroche en forme de bec venant en prise avec le premier flexible hydraulique secondaire.

Selon un aspect particulièrement avantageux de l'invention, le diamètre du premier flexible hydraulique secondaire est inférieur au plus grand diamètre des flexibles hydrauliques primaires.

La nappe hydraulique selon l'invention peut donc recevoir des flexibles hydrauliques de diamètres différents, permettant d'alimenter plusieurs types d'actionneurs. A titre d'exemple, les flexibles hydrauliques primaires alimentent les moteurs et pompes, tandis que le premier flexible hydraulique secondaire alimente un système de drainage ou un actionneur annexe.

De préférence, mais non exclusivement, le diamètre du premier flexible hydraulique secondaire est de l'ordre d'un pouce et demi, tandis que le plus grand diamètre des flexibles hydrauliques primaires est de l'ordre de deux pouces.

Selon un mode de réalisation préférentiel, les flexibles hydrauliques primaires présentent sensiblement le même diamètre. Encore de préférence, le diamètre des flexibles hydrauliques primaires est de l'ordre de deux pouces. Avantageusement, la nappe hydraulique selon l'invention comporte en outre au moins une barrette transversale qui reçoit les flexibles hydrauliques primaires orientés perpendiculairement à ladite barrette.

La barrette peut également recevoir le premier flexible hydraulique secondaire, ainsi qu'un premier flexible porteur.

Pour ce faire, la barrette est munie d'orifices qui sont traversés par les flexibles.

Cette barrette permet de maintenir un écartement constant entre les flexibles hydrauliques.

De préférence, considérés dans un plan transversal à la nappe, l'épaisseur de la nappe correspond à la largeur de la barrette.

Avantageusement, la largeur des maillons de la première série, considérée dans un plan perpendiculaire aux flexibles hydrauliques primaires, est sensiblement égale ou supérieure à la largeur de ladite barrette.

On comprend donc que l'épaisseur de la nappe correspond sensiblement à la largeur de la barrette, et que la présence des maillons n'augmente pas l'épaisseur de la nappe, et donc ne nuit pas à l'enroulement de la nappe sur elle-même.

Selon un mode de réalisation, la nappe hydraulique selon l'invention comporte une pluralité de barrettes qui sont espacées les unes des autres selon la direction longitudinale de la nappe hydraulique, les maillons de la première série sont disposés entre les barrettes, et la longueur de l'un des maillons de la première série est sensiblement égale à la distance entre deux barrettes adjacentes.

Les maillons de la première série sont préférentiellement souples de façon à accompagner la déformation en flexion des flexibles hydrauliques.

De préférence, deux maillons consécutifs de la première série sont séparés l'un de l'autre par l'une des barrettes.

Avantageusement, la nappe hydraulique comporte en outre au moins un câble électrique traversant un orifice de la barrette.

Avantageusement, les maillons de la première série reçoivent le premier flexible porteur.

De préférence, le premier flexible hydraulique secondaire est disposé entre le flexible porteur et les flexibles hydrauliques primaires.

De préférence, le premier flexible porteur comporte un câble métallique dont la fonction est de reprendre les efforts de traction longitudinaux subis par la nappe hydraulique.

On comprend donc que les maillons de la première série coopèrent à la fois avec le premier flexible porteur et le premier flexible hydraulique secondaire. Un intérêt est de pouvoir assurer un correct positionnement des maillons par rapport aux flexibles hydrauliques.

De préférence, les maillons de la première série présentent des canaux dans lesquels le premier flexible porteur est engagé.

Selon un mode de réalisation avantageux, au moins l'un des maillons de la première série est constitué d'une pluralité d'éléments de maillons unitaires juxtaposés. Les éléments de maillons unitaires sont distincts les uns des autres et viennent au contact les uns des autres par leurs faces latérales. De préférence, chaque élément de maillon unitaire forme une seule pièce. Chaque élément de maillon comporte un logement pour recevoir le premier flexible hydraulique secondaire, et un canal pour recevoir le premier flexible porteur.

De préférence, les faces latérales des éléments de maillons unitaires sont convexes, de sorte que deux éléments de maillons adjacents sont en contact l'un de l'autre par leurs faces latérales convexes respectives. Grâce à cette conformation, les éléments de maillons peuvent aisément bouger l'un par rapport à l'autre lors de la déformation en flexion de la nappe pendant l'enroulement ou le déroulement.

Autrement dit, le maillon - constitué par la pluralité d'éléments de maillon unitaires, présente sensiblement la même déformation en flexion que les flexibles hydrauliques lors de l'enroulement.

Avantageusement, la nappe hydraulique comporte en outre un second flexible hydraulique secondaire, les premier et second flexibles hydrauliques secondaires étant disposés de part et d'autre de la pluralité de flexibles hydrauliques primaires.

Selon un mode de réalisation préférentiel, le second flexible hydraulique secondaire présente un diamètre inférieur au diamètre des flexibles hydrauliques primaires.

De préférence, le diamètre du second flexible hydraulique secondaire est sensiblement égal au diamètre du premier flexible hydraulique secondaire.

Avantageusement, la nappe hydraulique comporte en outre une seconde série de maillons parallèle à la première série de maillons, les première et seconde séries de maillons étant disposées de part et d'autre de l'ensemble constitué par les flexibles primaires et secondaires, et les maillons de la seconde série sont fixés au second flexible hydraulique secondaire.

Les première et seconde séries de maillons constituent ainsi et de préférence les bords latéraux de la nappe hydraulique.

Encore de préférence, les maillons de la seconde série sont similaires ou identiques aux maillons de la première série.

En particulier, les maillons de la seconde série peuvent être formés d'une seule pièce ou bien constitués d'une pluralité d'éléments de maillons unitaires.

Lorsqu'elle est présente, la barrette comporte préférentiellement un orifice pour recevoir le second flexible hydraulique secondaire. Avantageusement, la nappe hydraulique selon l'invention comporte en outre un second flexible porteur qui s'étend parallèlement au premier flexible porteur, les maillons de la seconde série recevant le deuxième flexible porteur.

De préférence, les premier et second flexibles porteurs sont disposés de part et d'autre des flexibles hydrauliques primaires et secondaires.

Avantageusement, les maillons des première et seconde séries comportent des faces extérieures, et la longueur des barrettes est sensiblement égale à la distance entre les faces extérieures des maillons des première et seconde séries.

Avantageusement, les flexibles hydrauliques primaires comportent des première et seconde extrémités, la nappe hydraulique comporte en outre au moins un raccord hydraulique qui est perpendiculaire aux flexibles hydrauliques primaires tout en étant connecté hydrauliquement aux premières extrémités des flexibles hydrauliques primaires, et le premier flexible porteur est monté au raccord hydraulique.

De préférence, les flexibles hydrauliques secondaires comportent également des extrémités connectées hydrauliquement au raccord hydraulique.

De préférence, le premier flexible porteur est monté au raccord hydraulique de manière amovible, de façon à pouvoir démonter si nécessaire le raccord amovible.

De préférence, le raccord hydraulique comporte un dispositif d'accroche pour recevoir un flexible porteur d'une autre nappe hydraulique.

De préférence, la nappe hydraulique comporte un premier et un deuxième raccords hydrauliques qui sont disposés à chacune des extrémités longitudinales de ladite nappe hydraulique.

Lorsqu'il est présent, le second flexible porteur est également fixé aux raccords hydrauliques.

L'invention porte en outre sur un ensemble hydraulique comportant au moins une première et une deuxième nappes hydrauliques selon l'invention, les première et deuxième nappes hydrauliques étant connectées hydrauliquement l'une à l'autre par l'intermédiaire d'au moins un raccord hydraulique.

De préférence, le raccord hydraulique comporte au moins un dispositif de couplage auquel sont reliés les flexibles porteurs des première et deuxième nappes hydrauliques.

### Brève description des dessins

L'invention sera mieux comprise à la lecture de la description qui suit de modes de mise en oeuvre de l'invention donnés à titre d'exemples non limitatifs, en référence aux dessins annexés, sur lesquels :
[Fig.1] La figure **1** illustre une machine de forage comportant un ensemble hydraulique selon l'invention ;
[Fig.2]la figure **2** est une vue en perspective d'une nappe hydraulique selon l'invention de l'ensemble hydraulique de la figure **1** ;
[Fig.3] la figure **3** est une vue de dessus de la nappe hydraulique de la figure **2** ;
[Fig.4] la figure **4** est une vue en coupe transversale de la nappe hydraulique de la figure **3****,** montrant notamment une barrette ;
[Fig.5]la figure **5** illustre un maillon de la nappe hydraulique ;
[Fig.6] la figure **6** illustre un élément de maillon unitaire d'une variante du maillon de la figure **5****;**
[Fig.7]la figure **7** est une vue de détail d'un raccord hydraulique ; et
[Fig.8]la figure **8** illustre en vue de côté un ensemble hydraulique selon l'invention comportant deux nappes hydrauliques reliées l'une à l'autre.

### Description des modes de réalisation

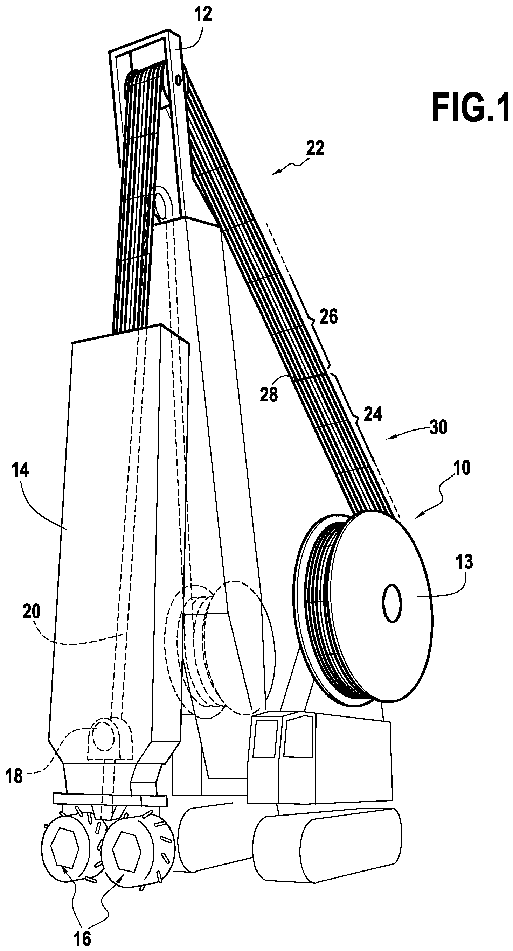

Sur la figure **1****,** on a illustré un exemple d'outillage pour la réalisation de parois moulées de grande profondeur, qui comprend un véhicule à chenilles **10** équipé d'une potence **12** sur laquelle est suspendu un châssis de fraisage **14.** Deux paires de roues de fraisage **16** d'axes horizontaux entraînés par des moteurs hydrauliques sont disposées à l'extrémité inférieure du châssis de fraisage **14.** Ces roues de fraisage sont équipées de dents réparties en périphérie et destinées à creuser le sol.

Une pompe hydraulique **18** est également installée sur une partie du châssis **14,** au-dessus des roues de fraisage. Cette pompe permet d'aspirer les particules découpées par les fraises et de les évacuer vers la surface par l'intermédiaire d'un tuyau d'évacuation **20.**

De façon connue, le fonctionnement des différents organes hydrauliques (les moteurs, la pompe et éventuellement d'autres composants hydrauliques) nécessitent une alimentation en fluide. Cette alimentation est réalisée par l'intermédiaire d'un ensemble hydraulique **22** qui achemine le fluide depuis la surface jusqu'aux différents organes hydrauliques. Comme on le comprend à l'aide de la figure **1****,** l'ensemble hydraulique **22** est enroulé, en amont, sur un tambour **13** fixé au véhicule **10.**

L'ensemble hydraulique **22** comporte une pluralité de nappes hydrauliques **30** conformes à la présente invention. L'ensemble hydraulique **22** est donc constitué d'une pluralité de nappes hydrauliques **30,** incluant des première et deuxième nappes hydrauliques **24,26,** qui sont connectées hydrauliquement les unes aux autres par l'intermédiaire de raccords hydrauliques **28.** Dans cet exemple, la longueur d'une nappe hydraulique est de l'ordre de 25 m.

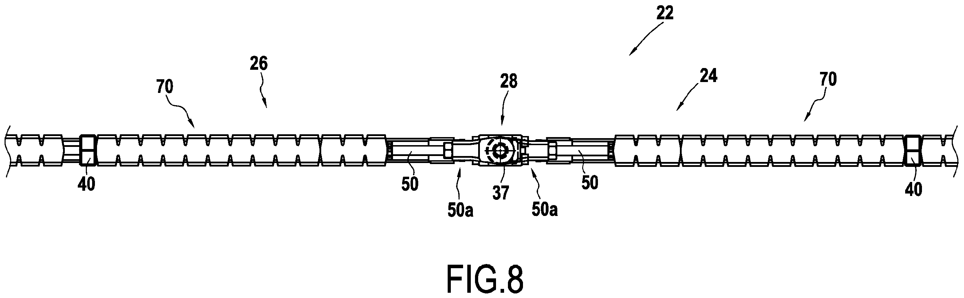

Une vue de détail de l'ensemble hydraulique **22** est illustrée en figure **8****.**

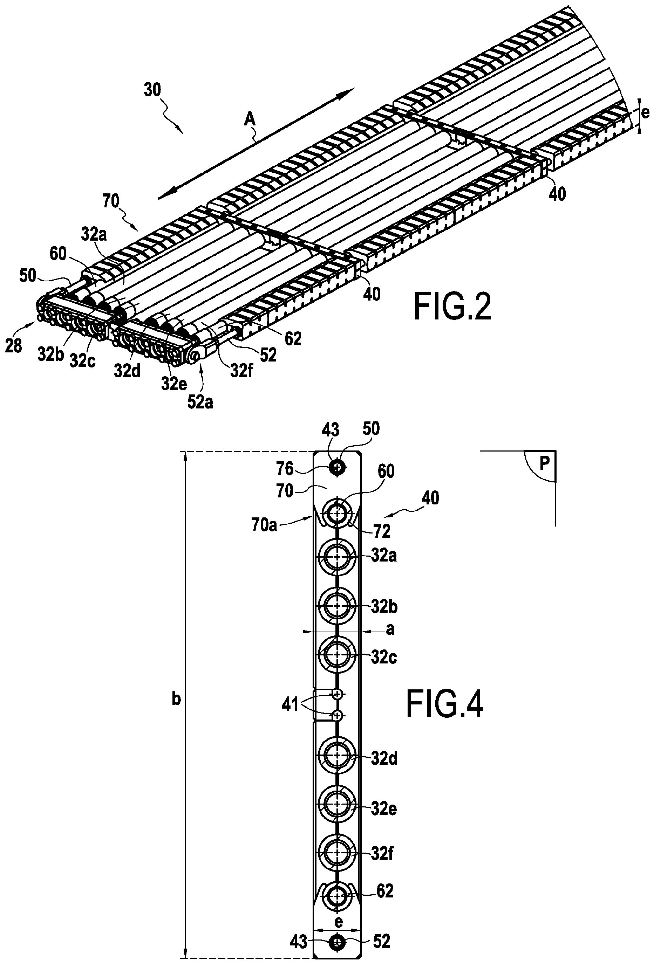

En se référant à la figure **2****,** on va décrire l'une des nappes hydrauliques **30** de l'ensemble hydraulique **22.** La nappe hydraulique **30** présente une direction longitudinale **A.** La nappe hydraulique comporte une pluralité de flexibles hydrauliques primaires référencés **32a,32b,32c,32d,32e,32f,** qui s'étendent parallèlement les uns aux autres. Dans cet exemple non-limitatif, les flexibles hydrauliques primaires sont au nombre de six, et présentent le même diamètre qui est sensiblement égal à deux pouces.

Comme on le constate à l'aide des figures **2** à **4****,** les flexibles hydrauliques primaires **32a,...,32f** sont regroupés et maintenus ensemble à l'aide de barrettes **40,** ces barrettes **40** constituent des dispositifs de guidage grâce auxquels les flexibles hydrauliques primaires **30** sont maintenus alignés parallèlement les uns aux autres, avec un écartement sensiblement identique entre deux flexibles hydrauliques primaires adjacents. Les barrettes sont perpendiculaires aux flexibles hydrauliques.

Dans cet exemple, les barrettes **40** sont en métal, de préférence en aluminium. Dans cet exemple de réalisation, la largeur a de la barrette **40** est légèrement supérieure au diamètre des flexibles hydrauliques primaires **32a,32b.**

On constate par ailleurs que les barrettes **40** sont espacées les unes des autres selon la direction longitudinale **A** de la nappe hydraulique **30.**

A l'aide de la figure **4****,** on constate que la longueur **b** des barrettes **40** correspond sensiblement à la largeur de la nappe hydraulique **30.**

Par ailleurs, la largeur **a** des barrettes **40** correspond sensiblement à l'épaisseur **e** de la nappe hydraulique **30.**

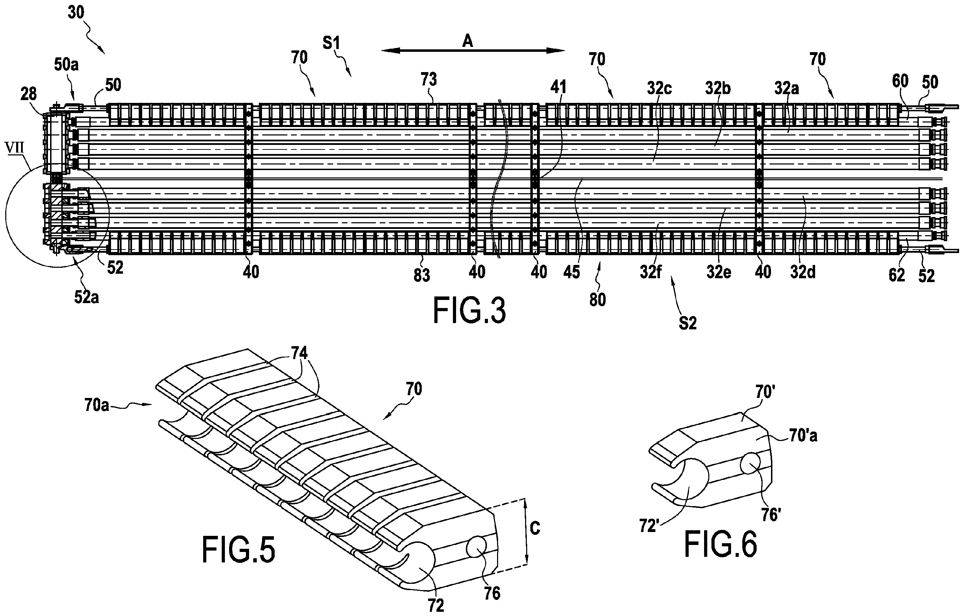

En se référant à nouveau aux figures **3** et **4****,** on constate que les barrettes comportent en outre des orifices **41,** disposés en partie médiane des barrettes **40** pour recevoir au moins un câble électrique **45** qui sert à alimenter des actionneurs ou des capteurs disposés dans le châssis **14.**

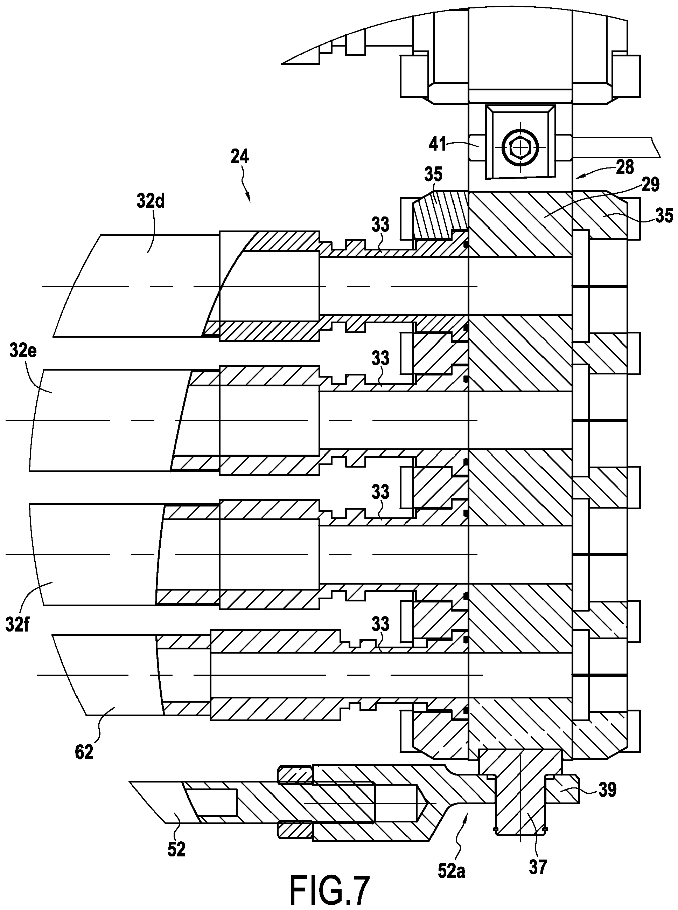

En se référant à la figure **7****,** on constate que les premières extrémités longitudinales des flexibles hydrauliques primaires comportent des embouts **33** qui sont connectés hydrauliquement au raccord hydraulique **28.** Pour ce faire, les raccords hydrauliques comportent des segments de fixation **35** qui sont fixés au corps **29** du raccord hydraulique **28,** et qui enserrent chacun des embouts **33** des flexibles hydrauliques primaires.

Plus précisément, les segments de fixation **35** sont disposés de part et d'autre du corps **29** du raccord hydraulique **28,** de façon à connecter hydrauliquement entre elles deux nappes hydrauliques voisines par le biais du raccord hydraulique **28.**

Par ailleurs, la nappe hydraulique **30** comporte en outre un premier flexible porteur **50** et un second flexible porteur **52** qui s'étendent parallèlement aux flexibles hydrauliques primaires **32a...32f.**

Comme on le constate à l'aide des figures **2** et **7****,** les premier et second flexibles porteurs **50,52** sont reliés au raccord hydraulique **28** par leurs extrémités longitudinales **50a,52a.** Pour ce faire, le raccord hydraulique **28** est pourvue de dispositifs d'accroché constitués d'ergots **37** qui viennent en prise avec les parties d'extrémité **39** des premier et second flexibles porteurs **50,52.**

En se référant à la figure **8****,** on constate que les première et deuxième nappes hydrauliques **24,26** sont reliées ensemble via le raccord hydraulique **28** de telle façon que leurs premiers flexibles porteurs **50** sont fixés ensemble à l'ergot **37** du raccord hydraulique **28.**

En se référant maintenant à la figure **4****,** on constate que la barrette **40** est pourvue d'orifices **43,** disposés en ses extrémités longitudinales, lesdits orifices **43** étant traversés par les premier et second flexibles porteurs **50,52.**

Conformément à l'invention, la nappe hydraulique comporte en outre un premier flexible hydraulique secondaire **60,** et un second flexible hydraulique secondaire **62.** Dans cet exemple, les premier et second flexibles hydrauliques secondaires **60,62** présentent un diamètre inférieur au diamètre des flexibles hydrauliques primaires. Dans cet exemple, le diamètre des premier et second flexibles hydrauliques secondaires est de un pouce et demi.

On constate sur la figure **3****,** que les premier et second flexibles hydrauliques secondaires **60,62** sont parallèles aux flexibles hydrauliques primaires **32a,...,32f.** Les premier et second flexibles hydrauliques secondaires **60,62** sont disposés de part et d'autre de la pluralité de flexibles hydrauliques primaires.

Par ailleurs, le premier flexible hydraulique secondaire est disposé entre le premier flexible porteur **50** et les flexibles hydrauliques primaires. Le second flexible hydraulique secondaire est disposé entre le second flexible porteur **52** et les flexibles hydrauliques primaires.

On comprend donc que les premier et second flexibles porteurs **50, 52,** les flexibles hydrauliques primaires **32a**,**....32f**, et les premier et second flexibles hydrauliques secondaires **60,62** sont parallèles entre eux.

La barrette **40** comporte en outre des orifices qui sont traversés par les premier et second flexibles hydrauliques secondaires **60,62,** comme illustré en figure **4****.**

Par ailleurs, les flexibles hydrauliques primaires, les flexibles hydrauliques secondaires et les flexibles porteurs sont orientés perpendiculairement à la barrette **40.**

Conformément à l'invention, la nappe hydraulique **30** comporte une première série **S1** de maillons **70** qui s'étendent parallèlement aux flexibles hydrauliques primaires **50,52.** Par ailleurs, les maillons de la première série **S1** sont fixés aux premiers flexibles hydrauliques secondaires **60.** On comprend que les maillons **70** s'étendent également parallèlement aux flexibles hydrauliques secondaires.

Sur la figure **5****,** on a illustré un premier exemple de réalisation d'un maillon **70** de la première série **S1.** Le maillon **70** comporte un premier logement **72** qui présente la forme d'un canal longitudinal qui débouche en une première extrémité **70a** du maillon **70.** On constate sur la figure **5** que le maillon **70** présente une forme de bec, le premier flexible hydraulique secondaire **60** étant engagé dans le logement **72.** Dans cet exemple de réalisation, les maillons **70** de la première série **S1** sont donc fixés par clipsage au premier flexible secondaire **60.**

En se référant à nouveau à la figure **5****,** on constate que le maillon **70** est formé d'une pièce longitudinale, de préférence en plastique, et comporte des échancrures transversales **74** distantes les unes des autres selon la longueur du maillon, de façon à faciliter la déformation en flexion du maillon **70.** On comprend donc que la présence des échancrures **74** permet au maillon **70** d'accompagner la déformation en flexion des flexibles hydrauliques, et des flexibles porteurs, notamment lors de l'enroulement autour du tambour **13.** De préférence, les maillons sont réalisés dans un matériau plastique.

Le maillon **70** comporte en outre un autre logement longitudinal **76** qui présente la forme d'un canal qui est destiné à recevoir le premier flexible porteur **50.** Par ailleurs, la largeur c des maillons de la première série **S1,** considérée dans un plan **P** perpendiculaire aux flexibles hydrauliques primaires, est dans cet exemple sensiblement égale à la largeur **a** de la barrette **40.**

On constate par ailleurs que les maillons **70** de la première série sont disposés entre les barrettes **40,** la longueur d'au moins un des maillons **70** de la première série étant sensiblement égale, ou légèrement inférieure, à la distance séparant deux barrettes adjacentes.

Selon une variante, le maillon **70** peut être constitué d'une pluralité d'éléments de maillons unitaires **70'** distincts les uns des autres et juxtaposés les uns aux autres. Chaque élément de maillon unitaire comporte donc un logement **72'** débouchant pour être clipsé au premier flexible hydraulique secondaire, et un canal **76'** pour recevoir le premier flexible porteur **50.** Par ailleurs, les faces latérales **70'a** des éléments de maillons unitaires **70'** sont bombées ou convexes de manière à faciliter le mouvement relatif de deux éléments de maillons unitaires juxtaposés lors de la déformation en flexion de la nappe hydraulique.

Avantageusement, la nappe hydraulique selon l'invention comporte en outre une seconde série **S2** de maillons **80** parallèles à la première série **S1** de maillons **70.** Dans cet exemple, les maillons **80** de la seconde série sont identiques aux maillons **70** de la première série **S1.**

Les première et seconde séries de maillons **S1,S2** sont disposées de part et d'autre de l'ensemble constitué par les flexibles primaires et secondaires, de sorte que les première et seconde séries de maillons constituent les flancs de la nappe hydraulique.

Par ailleurs, les maillons de la seconde série **S2** sont fixés par clipsage au second flexible secondaire **62.** De plus, les maillons de la seconde série **S2** sont traversés par le second flexible porteur **52.**

A l'instar du premier flexible hydraulique secondaire, le second flexible hydraulique secondaire **62** présente un diamètre inférieur au diamètre des flexibles hydrauliques primaires. Dans cet exemple, les premier et second flexibles hydrauliques **60,62** présentent le même diamètre, à savoir un pouce et demi.

Par ailleurs, les maillons **70,80** des première et seconde séries **S1, S2** comportent des faces extérieures **73,83.** On constate que la longueur b des barrettes est sensiblement égale à la distance entre les faces extérieures des maillons des première et seconde séries **S1, S2.**

## Revendications

1. Nappe hydraulique (24,26,30) ayant une direction longitudinale (A) et comportant :
une pluralité de flexibles hydrauliques primaires (32a,32b,32c,32d,32e,32f) s'étendant parallèlement les uns aux autres ;
au moins un premier flexible porteur (50) qui s'étend parallèlement aux flexibles hydrauliques primaires ; la nappe hydraulique comportant en outre :
un premier flexible hydraulique secondaire (60), parallèle aux flexibles hydrauliques primaires, une première série (S1) de maillons (70) s'étendant parallèlement aux flexibles hydrauliques primaires (32a,32b,32c,32d,32e,32f), les maillons de la première série (S1) étant fixés au premier flexible hydraulique secondaire (60), et **caractérisée en ce que** les maillons (70) de la première série (S1) comportent des logements (72) dans lesquels le premier flexible hydraulique secondaire (60) est engagé.

2. Nappe hydraulique selon la revendication 1, **caractérisée en ce que** les maillons (70) de la première série (S1) sont fixés par clipsage au premier flexible hydraulique secondaire (60).

3. Nappe hydraulique selon l'une quelconque des revendications précédentes, **caractérisée en ce que** le diamètre du premier flexible hydraulique secondaire (60) est inférieur au plus grand diamètre des flexibles hydrauliques primaires (32a,32b,32c,32d,32e,32f).

4. Nappe hydraulique selon l'une quelconque des revendications précédentes, **caractérisée en ce que** les flexibles hydrauliques primaires (32a,32b,32c,32d,32e,32f) présentent sensiblement le même diamètre.

5. Nappe hydraulique selon l'une quelconque des revendications précédentes, **caractérisée en ce qu'**elle comporte en outre au moins une barrette transversale (40) qui reçoit les flexibles hydrauliques primaires (32a,32b,32c,32d,32e,32f) orientés perpendiculairement à ladite barrette.

6. Nappe hydraulique selon la revendication 5, **caractérisée en ce que** la largeur (c) des maillons de la première série (S1), considérée dans un plan (P) perpendiculaire aux flexibles hydrauliques primaires, est sensiblement égale ou supérieure à la largeur (a) de ladite barrette (40).

7. Nappe hydraulique selon la revendication 5 ou 6, **caractérisée en ce qu'**elle comporte une pluralité de barrettes (40) qui sont espacées les unes des autres selon la direction longitudinale (A) de la nappe hydraulique (30), **en ce que** les maillons (70) de la première série sont disposés entre les barrettes, et **en ce que** la longueur de l'un des maillons de la première série est sensiblement égale à la distance entre deux barrettes adjacentes.

8. Nappe hydraulique selon la revendication 7, **caractérisée en ce qu'**elle comporte en outre au moins un câble électrique (45) traversant un orifice (41) de la barrette (40).

9. Nappe hydraulique selon l'une quelconque des revendications précédentes, **caractérisée en ce que** les maillons (70) de la première série reçoivent le premier flexible porteur (50).

10. Nappe hydraulique selon la revendication 9, **caractérisée en ce que** les maillons (70) de la première série présentent des canaux (76) traversés par le premier flexible porteur.

11. Nappe hydraulique selon l'une quelconque des revendications précédentes, **caractérisée en ce qu'**au moins l'un des maillons de la première série est constitué d'une pluralité d'éléments de maillons unitaires (70') juxtaposés.

12. Nappe hydraulique selon l'une quelconque des revendications précédentes, **caractérisée en ce qu'**elle comporte en outre un second flexible hydraulique secondaire (62), les premier et second flexibles hydrauliques secondaires (60,62) étant disposés de part et d'autre de la pluralité de flexibles hydrauliques primaires (32a,32b,32c,32d,32e,32f).

13. Nappe hydraulique selon la revendication 12, **caractérisée en ce que** le second flexible hydraulique secondaire (62) présente un diamètre inférieur au diamètre des flexibles hydrauliques primaires.

14. Nappe hydraulique selon la revendication 12 ou 13, **caractérisée en ce qu'**elle comporte en outre une seconde série (S2) de maillons (80) parallèle à la première série (S1) de maillons (70), les première et seconde séries (S1,S2) de maillons étant disposées de part et d'autre de l'ensemble constitué par les flexibles primaires et secondaires, et **en ce que** les maillons de la seconde série (S2) sont fixés au second flexible hydraulique secondaire (62).

15. Nappe hydraulique selon la revendication 14, **caractérisée en ce qu'**elle comporte en outre un second flexible porteur (52) qui s'étend parallèlement au premier flexible porteur (50), les maillons de la seconde série recevant le second flexible porteur.

16. Nappe hydraulique selon la revendication 5 et l'une quelconque des revendications 14 ou 15, **caractérisée en ce que** les maillons (70,80) des première et seconde séries (S1,S2) comportent des faces extérieures (73,83), et **en ce que** la longueur (b) de la barrette est sensiblement égale à la distance entre les faces extérieures des maillons des première et seconde séries.

17. Nappe hydraulique selon l'une quelconque des revendications précédentes, **caractérisée en ce que** les flexibles hydrauliques primaires (32a,32b,32c,32d,32e,32f) comportent des première et seconde extrémités (33), **en ce que** la nappe hydraulique comporte en outre au moins un raccord hydraulique (28) qui est perpendiculaire aux flexibles hydrauliques primaires tout en étant connecté aux premières extrémités des flexibles hydrauliques primaires, et **en ce que** le premier flexible porteur (50) est solidaire du raccord hydraulique.

18. Ensemble hydraulique (22) comportant au moins une première et une deuxième nappes hydrauliques selon l'une quelconque des revendications précédentes, les première et deuxième nappes hydrauliques (24,26) étant connectées hydrauliquement l'une à l'autre par l'intermédiaire d'au moins un raccord hydraulique (28).

## Patentansprüche

1. Hydraulikanordnung (24, 26, 30), die eine Längsrichtung (A) aufweist und beinhaltet:
mehrere primäre Hydraulikschläuche (32a, 32b, 32c, 32d, 32e, 32f), die sich parallel zueinander erstrecken,
mindestens einen ersten Trägerschlauch (50), der sich parallel zu den primären Hydraulikschläuchen erstreckt,
wobei die Hydraulikanordnung ferner beinhaltet:
einen ersten sekundären Hydraulikschlauch (60) parallel zu den primären Hydraulikschläuchen, wobei sich eine erste Reihe (S1) an Gliedern (70) parallel zu den primären Hydraulikschläuchen (32a, 32b, 32c, 32d, 32e, 32f) erstreckt, wobei die Glieder der ersten Reihe (S1) an dem ersten sekundären Hydraulikschlauch (60) befestigt sind, und **dadurch gekennzeichnet, dass** die Glieder (70) der ersten Reihe (S1) Aufnahmen (72) beinhalten, in denen der erste sekundäre Hydraulikschlauch (60) in Eingriff genommen ist.

2. Hydraulikanordnung nach Anspruch 1, **dadurch gekennzeichnet, dass** die Glieder (70) der ersten Reihe (S1) durch Einschnappen an dem ersten sekundären Hydraulikschlauch (60) befestigt sind.

3. Hydraulikanordnung nach einem der vorhergehenden Ansprüche, **dadurch gekennzeichnet, dass** der Durchmesser des ersten sekundären Hydraulikschlauchs (60) kleiner als der größte Durchmesser der primären Hydraulikschläuche (32a, 32b, 32c, 32d, 32e, 32f) ist.

4. Hydraulikanordnung nach einem der vorhergehenden Ansprüche, **dadurch gekennzeichnet, dass** die primären Hydraulikschläuche (32a, 32b, 32c, 32d, 32e, 32f) im Wesentlichen den gleichen Durchmesser aufweisen.

5. Hydraulikanordnung nach einem der vorhergehenden Ansprüche, **dadurch gekennzeichnet, dass** sie ferner mindestens einen Quersteg (40) beinhaltet, der die primären Hydraulikschläuche (32a, 32b, 32c, 32d, 32e, 32f) aufnimmt, die senkrecht zu dem Steg ausgerichtet sind.

6. Hydraulikanordnung nach Anspruch 5, **dadurch gekennzeichnet, dass** die Breite (c) der Glieder der ersten Reihe (S1), betrachtet in einer Ebene (P) senkrecht zu den primären Hydraulikschläuchen, im Wesentlichen gleich der oder größer als die Breite (a) des Stegs (40) ist.

7. Hydraulikanordnung nach Anspruch 5 oder 6, **dadurch gekennzeichnet, dass** sie mehrere Stege (40) beinhaltet, die entlang der Längsrichtung (A) der Hydraulikanordnung (30) voneinander beabstandet sind, dass die Glieder (70) der ersten Reihe zwischen den Stegen angeordnet sind, und dass die Länge von einem der Glieder der ersten Reihe im Wesentlichen gleich dem Abstand zwischen zwei benachbarten Stegen ist.

8. Hydraulikanordnung nach Anspruch 7, **dadurch gekennzeichnet, dass** sie ferner mindestens ein Stromkabel (45) beinhaltet, das eine Öffnung (41) des Stegs (40) durchläuft.

9. Hydraulikanordnung nach einem der vorhergehenden Ansprüche, **dadurch gekennzeichnet, dass** die Glieder (70) der ersten Reihe den ersten Trägerschlauch (50) aufnehmen.

10. Hydraulikanordnung nach Anspruch 9, **dadurch gekennzeichnet, dass** die Glieder (70) der ersten Reihe Kanäle (76) aufweisen, die von dem ersten Trägerschlauch durchlaufen werden.

11. Hydraulikanordnung nach einem der vorhergehenden Ansprüche, **dadurch gekennzeichnet, dass** mindestens eines der Glieder der ersten Reihe aus mehreren Elementen aus nebeneinanderliegenden einheitlichen Gliedern (70') besteht.

12. Hydraulikanordnung nach einem der vorhergehenden Ansprüche, **dadurch gekennzeichnet, dass** sie ferner einen zweiten sekundären Hydraulikschlauch (62) beinhaltet, wobei der erste und der zweite sekundäre Hydraulikschlauch (60, 62) beiderseits der mehreren primären Hydraulikschläuche (32a, 32b, 32c, 32d, 32e, 32f) angeordnet sind.

13. Hydraulikanordnung nach Anspruch 12, **dadurch gekennzeichnet, dass** der zweite sekundäre Hydraulikschlauch (62) einen Durchmesser aufweist, der kleiner als der Durchmesser der primären Hydraulikschläuche ist.

14. Hydraulikanordnung nach Anspruch 12 oder 13, **dadurch gekennzeichnet, dass** sie ferner eine zweite Reihe (S2) an Gliedern (80) parallel zu der ersten Reihe (S1) an Gliedern (70) beinhaltet, wobei die erste und die zweite Reihe (S1, S2) an Gliedern beiderseits der Baugruppe angeordnet sind, die durch die primären und sekundären Schläuche gebildet wird, und dass die Glieder der zweiten Reihe (S2) an dem zweiten sekundären Hydraulikschlauch (62) befestigt sind.

15. Hydraulikanordnung nach Anspruch 14, **dadurch gekennzeichnet, dass** sie ferner einen zweiten Trägerschlauch (52) beinhaltet, der sich parallel zu dem ersten Trägerschlauch (50) erstreckt, wobei die Glieder der zweiten Reihe den zweiten Trägerschlauch aufnehmen.

16. Hydraulikanordnung nach Anspruch 5 und einem der Ansprüche 14 oder 15, **dadurch gekennzeichnet, dass** die Glieder (70, 80) der ersten und der zweiten Reihe (S1, S2) Außenflächen (73, 83) beinhalten und dass die Länge (b) des Stegs im Wesentlichen gleich dem Abstand zwischen den Außenflächen der Glieder der ersten und der zweiten Reihe ist.

17. Hydraulikanordnung nach einem der vorhergehenden Ansprüche, **dadurch gekennzeichnet, dass** die primären Hydraulikschläuche (32a, 32b, 32c, 32d, 32e, 32f) erste und zweite Enden (33) beinhalten, und dass die Hydraulikanordnung ferner mindestens einen Hydraulikanschluss (28) beinhaltet, der senkrecht zu den primären Hydraulikschläuchen ist und dabei mit den ersten Enden der primären Hydraulikschläuche verbunden ist, und dass der erste Trägerschlauch (50) fest mit dem Hydraulikanschluss verbunden ist.

18. Hydraulikbaugruppe (22), die mindestens eine erste und eine zweite Hydraulikanordnung nach einem der vorhergehenden Ansprüche beinhaltet, wobei die erste und die zweite Hydraulikanordnung (24, 26) durch mindestens einen Hydraulikanschluss (28) hydraulisch miteinander verbunden sind.

## Claims

1. A hydraulic mat (24,26,30) having a longitudinal direction (A) and including:
a plurality of primary flexible hydraulic hoses (32a,32b,32c,32d,32e,32f) extending parallel to one another;
at least one first carrier hose (50) which extends parallel to the primary flexible hydraulic hoses; the hydraulic mat also comprising:
a first secondary flexible hydraulic hose (60) parallel to the primary flexible hydraulic hoses, a first series (S1) of links (70) extending parallel to the primary flexible hydraulic hoses (32a,32b,32c,32d,32e,32f), the links of the first series (S1) being fastened to the first secondary flexible hydraulic hose (60), and **characterized in that** the links (70) of the first series (S1) include housings (72) in which the first secondary flexible hydraulic hose (60) is engaged.

2. The hydraulic mat according to claim 1, **characterized in that** the links (70) of the first series (S1) are fastened by clipping to the first secondary flexible hydraulic hose (60).

3. The hydraulic mat according to any one of the preceding claims, **characterized in that** the diameter of the first secondary flexible hydraulic hose (60) is less than the greatest diameter of the primary flexible hydraulic hoses (32a,32b,32c,32d,32e,32f).

4. The hydraulic mat according to any one of the preceding claims, **characterized in that** the primary flexible hydraulic hoses (32a,32b,32c,32d,32e,32f) have substantially the same diameter.

5. The hydraulic mat according to any one of the preceding claims, **characterized in that** it also includes at least one transverse clasp (40) which receives the primary flexible hydraulic hoses (32a,32b,32c,32d,32e,32f) oriented perpendicular to said clasp.

6. The hydraulic mat according to claim 5, **characterized in that** the width (c) of the links of the first series (S1), considered in a plane (P) perpendicular to the primary flexible hydraulic hoses, is substantially equal to or greater than the width (a) of said clasp (40).

7. The hydraulic mat according to claim 5 or 6, **characterized in that** it includes a plurality of clasps (40) which are spaced from one another in the longitudinal direction (A) of the hydraulic mat (30), **in that** the links (70) of the first series are located between the clasps, and **in that** the length of one of the links of the first series is substantially equal to the distance between two adjacent clasps.

8. The hydraulic mat according to claim 7, **characterized in that** it also includes at least one electrical cable (45) passing through an opening (41) of the clasp (40).

9. The hydraulic mat according to any one of the preceding claims, **characterized in that** the links (70) of the first series receive the first carrier hose (50).

10. The hydraulic at according to claim 9, **characterized in that** the links (70) of the first series have channels (76) through which the first carrier hose passes.

11. The hydraulic mat according to any one of the preceding claims, **characterized in that** at least one of the links of the first series consists of a plurality of unit link elements (70') side by side.

12. The hydraulic mat according to one of the preceding claims, **characterized in that** it also includes a second secondary flexible hydraulic hose (62), the first and second secondary flexible hydraulic hoses (60,62) being located on either side of the plurality of primary flexible hydraulic hoses (32a,32b,32c,32d,32e,32f).

13. The hydraulic mat according to claim 12, **characterized in that** the second secondary flexible hydraulic hose (62) has a diameter smaller than the diameter of the primary flexible hydraulic hoses.

14. The hydraulic mat according to claim 12 or 13, characterized that it also includes a second series (S2) of links (80) parallel to the first series (S1) of links (70), the first and second series (S1,S2) of links being located on either side of the assembly consisting of the primary and secondary flexible hoses, and in that the links of the second series (S2) are fastened to the second secondary flexible hydraulic hose (62).

15. The hydraulic mat according to claim 14, **characterized in that** it also includes a second carrier hose (52) which extends parallel to the first carrier hose (50), the links of the second series receiving the second carrier hose.

16. The hydraulic mat according to claim 5 and any one of claims 14 or 15, **characterized in that** the links (70,80) of the first and second series (S1,S2) include outer faces (73,83), and **in that** the length (b) of the clasp is substantially equal to the distance between the outer faces of the links of the first and second series.

17. The hydraulic mat according to any one of the preceding claims, **characterized in that** the primary flexible hydraulic hoses (32a,32b,32c,32d,32e,32f) include first and second ends (33), **in that** the hydraulic mat also includes at least one hydraulic connector (28) which is perpendicular to the primary flexible hydraulic hoses while being connected to the first ends of the primary flexible hydraulic hoses, and **in that** the first carrier hose (50) is integral with the hydraulic connector.

18. A hydraulic assembly (22) including at least one first and one second hydraulic mats according to any one of the preceding claims, the first and second hydraulic mats (24,26) being connected hydraulically to one another by means of at least one hydraulic connector (28).
